Europäisches Patentamt

(19) European Patent Office

Office européen des brevets

(11) Publication number: **0 106 466**
**B1**

(12) **EUROPEAN PATENT SPECIFICATION**

(45) Date of publication of patent specification: **07.01.88**

(21) Application number: **83304981.0**

(22) Date of filing: **30.08.83**

(51) Int. Cl.⁴: **C 13 D 3/14, B 01 J 41/00**

(54) **Removal of sulfonic resin extractables from aqueous sugar solutions using acrylic anion exchange resin.**

(30) Priority: **02.09.82 US 414173**

(43) Date of publication of application:
**25.04.84 Bulletin 84/17**

(45) Publication of the grant of the patent:
**07.01.88 Bulletin 88/01**

(84) Designated Contracting States:
**AT BE CH DE FR GB IT LI LU NL SE**

(56) References cited:
**AU-B- 462 285**
**GB-A-2 060 429**
**US-A-2 451 272**
**US-A-3 122 456**

(73) Proprietor: **Rohm and Haas Company**
**Independence Mall West**
**Philadelphia, Pennsylvania 19105 (US)**

(72) Inventor: **Fries, William**
**339 Maple Avenue**
**Southampton, PA., 18966 (US)**

(74) Representative: **Angell, David Whilton et al**
**ROHM AND HAAS (UK) LTD. European**
**Operations Patent Department Lennig House 2**
**Mason's Avenue**
**Croydon CR9 3NB (GB)**

Courier Press, Leamington Spa, England.

### Description

This invention relates to the purification of sugar syrup with ion exchange resin, and is particularly concerned with the removal, of impurities introduced into the sugar syrup during its treatment with strongly acidic, cation exchange resins.

Corn sugar syrups, made by acid hydrolysis of corn starch, are conventionally purified by treating them with strongly acidic, cation exchange resins containing sulfonic acid functional groups, followed by treatment with weakly basic resins made from styrenic, phenolic or epichlorohydrin-polyamine copolymers. These same cation exchange resins are used in the chromatographic separation and concentration of fructose in corn sugar syrup. The relatively recent use of corn sugar syrup in the manufacture of carbonated soft-drink beverages has revealed the presence of an impurity in the syrup that reacts with other ingredients of soft-drinks to form an objectionable haze in the beverage product. This haze-forming impurity has been traced to material extracted by the syrup from the sulfonic-group-bearing, cation exchange resins, and is present in syrups treated with such resins made both from styrenic and from phenolic copolymers.

Normal treatment of the corn sugar syrup includes an anion exchange step after the cation exchange step; this anion exchange step utilizes weakly basic anion exchange resins acceptable to the food and Drug Administration for food applications. Such resins have been made from styrenic, phenolic and epichlorohydrin-polyamine copolymers. These resins remove a portion of the haze-forming impurity, called hereinafter "sulfonic resin extractables", but enough remains after typical treatment of the corn sugar syrup to produce a detectable, and therefore unacceptable, haze in the soft-drink product. The estimated level of sulfonic resin extractables forming this haze is about 0.1 to about 1 ppm parts of the sugar syrup. Attempts to remove this level of the impurity with activated charcoal have not been entirely successful.

During the preparation of "high-fructose" corn syrup (HFCS), the corn syrup product stream is separated chromatographically, using the sulfonic-group-bearing, cation exchange resins, into concentrated fructose solution and glucose solution. Commercial HFCS is produced by blending the concentrated fructose solution back into the corn syrup product stream to enrich the fructose level. As the individual, concentrated solutions and the enriched product stream have all been exposed to additional sulfonic-group-bearing, cation exchange resin, each will contain sulfonic resin extractables. This is especially significant where the chromatographic separation is not followed by other ion exchange treatments which are partially effective in removing the extractables.

We have now found that anion exchange resin prepared from acrylic copolymer is surprisingly effective in reducing the concentration of sulfonic resin extractables in sugar syrups to an extremely low level, well below that at which these extractables cause haze formation in carbonated soft-drink beverages, and below the detectability limits of currently available analyses. We have also found a preferred process in which a minor amount of weakly basic, acrylic anion exchange resin is incorporated with a major amount of conventional, weakly basic non-acrylic anion exchange resin into a single bed, to achieve reduction of sulfonic resin extractables to below the haze-forming level.

According to this invention there is provided a process for removing sulfonic resin extractables from sugar syrup which has been treated with sulfonic-group-functionalized, cation exchange resin characterised in that said sugar syrup, is contacted with acrylic anion exchange resin, and is subsequently separated from the acrylic resin. The treatment may be with the acrylic resin alone but it is preferably with the acrylic resin combined with one or more of the weakly basic non-acrylic anion exchange resins which are usually styrenic, phenolic or epichlorohydrin-polyamine anion exchange resins. In this treatment with a mixture of resins the acrylic resin is and more preferably used in minor amount i.e. less than 50% by weight of the mixture.

This process is particularly useful for the treatment of corn sugar syrups and most particularly 30% to 60% solids, corn sugar syrups, high-fructose corn sugar syrups, fructose solutions and glucose solutions previously treated with sulfonic-group-functionalized, cation exchange resins, although it may be applied to any sugar syrups treated with sulfonic-group-functionalized, cation exchange resins, and is effective in removing sulfonic resin extractables from other aqueous liquids which have been in contact with sulfonic-group-functionalized, cation exchange resins.

The sulfonic-group-functionalized, cation exchange resins include resins which have been functionalized by treating a copolymer, either styrenic or phenolic, with a sulfonating agent. The sulfonic groups themselves may be in the form of the free acid or of any other exchangeable cation or mixture of cations.

The acrylic anion exchange resins useful in the process of this invention include both macroporous and gel resins prepared from crosslinked copolymers of acrylic and/or methacrylic acid and/or lower (i.e. $C_1$ to $C_8$)-alkyl esters of these acids; lower alkyl esters include esters of methanol, ethanol, propanols, butanols, pentanols, hexanols, heptanols and octanols. These copolymers are usually functionalized with weakly basic or strongly basic anion exchange functional groups, as for example, primary, secondary, tertiary and quaternary amine groups.

While the process of the present invention conveniently utilizes beds of ion exchange resin, it is possible to mix the resin directly with the sugar syrup and subsequently separate them, as by filtration. As

2

treatment with a bed of weakly basic, styrenic, phenolic or epichlorohydrin-polyamine anion exchange resins frequently follows the treatment with sulfonic-group-functionalized cation exchange resin, it is often convenient to add the weakly basic, acrylic anion exchange resin directly to the other weakly basic resin or resins in the same vessel, thus avoiding additional process equipment. If necessary, an additional bed of the acrylic anion exchange resin may, of course, be added to the process line; it is preferably added subsequent to the other non-acrylic anion exchange resins, but in any event must be after treatment with the sulfonic-group-fonctionalized, cation exchange resin. In the case of high-fructose corn sugar solutions which have been enriched with fructose solutions chromatographically separated using sulfonic-group-functionalized, cation exchange resins, treatment with the acrylic anion exchange resin must follow the chromatographic separation, and preferably occurs after blending of the fructose solution with the corn sugar solution. In this case the preferred treatment is with strongly basic acrylic resin used alone. The volume of acrylic resin used may be much smaller, typically 10% of the volume of the other anion exchange resins, although this size is indicated primarily by economic considerations, and larger beds are permissible. The size of the bed may readily be selected by one skilled in the art, based on the criteria of the equipment and resin cost, and the desired time between regenerations or replacements of the resin.

Treatment temperature may vary practically over the range at which the sugar solution is liquid, that is, from about 0°C to about 100°C, and higher if the solution is under elevated pressure. A practical upper limit of temperature is that at which the sugar solution acquires excessive color, or the ion exchange resins degrade thermally at an excessive rate. The preferred temperature range is from 20°C to 100°C, and more preferably from 35°C to 50°C; the higher temperatures are preferred because the viscosity of the sugar solution, and correspondingly the pressure drop across ion exchange resin beds at a given flow rate, is lower at higher temperatures.

As is generally to be expected, an anion exchange resin once separated from the sugar solution, may be reused until its capacity is exhausted, or until fouling creates excessive pressure drop across a bed of the resin. Then the resin may be discarded or regeneration can be carried out on an at least partially exhausted resin. Regenerants that are effective in removing sulfonic resin extractables from strongly basic acrylic resins include chloride salt solutions, dilute hydrochloric acid solution and concentrated (for example 37% by weight) hydrochloric acid solution; the concentrated acid being preferred. More preferred than aqueous solutions of dilute hydrochloric acid are aqueous solutions of dilute hydrochloric acid containing water-miscible alcohol at a level up to 30% by weight. Such alcoholic solutions are more effective regenerants than hydrochloric acid solutions containing only water as a solvent. Regenerants that are effective in removing sulfonic resin extractables from weakly basic acrylic resins include alkali metal and ammonium hydroxide and carbonate solutions; the preferred regenerants are dilute (3—20% by weight) aqueous solutions of these hydroxides and carbonates. Treatment of the resin with the above regenerants involves conventional techniques of contacting the resin with the regenerant and subsequently separating them; as will be apparent to those skilled in the art.

As used herein, a major amount means an amount greater than 50% by weight of the total amount. A minor amount, as used herein, means an amount less than 50% by weight of the total amount.

The following examples are given to illustrate the invention. All reagents indicated herein are of good commercial quality, and all percentages and other proportions are by weight, unless otherwise indicated.

Example 1

A concentrated filtrate containing about 50 ppm of sulfonic resin extractables was prepared, for ease of analytical determination for the extractables. A sulfonic-group-functionalized resin was ground, extracted with water and filtered through a filter membrane of 0.1 mm pore size; the resulting, clear filtrate was dried at 105°C and the dry residue was used to add a known concentration of sulfonic resin extractables to the sugar solutions.

For each of a series of adsorbents and ion exchange resins, 30 g of 40% aqueous glucose solution containing 50 ppm of sulfonic resin extractables was placed in contact with 3 g of the adsorbent or ion exchange resin under test, and the mixture was agitated vigorously for 1.0 hour. The percentage of sulfonic resin extractables adsorbed by the resin or adsorbent was determined from the reduction in ultraviolet absorption of the glucose solution at the absorption maximum which occurs at about 225 nm. Table I identifies the ion exchange resins and adsorbents which were tested, and Table II shows the results of these tests. Resins A, B, C and Q, which were the only acrylic anion exchange resins in the test, were alone in demonstrating a surprising and outstanding capability of adsorbing the extractables.

TABLE I

| Resin designation | Copolymer type | Copolymer form | Resin functionality |
|---|---|---|---|
| A | Methyl Acrylate-DVB | Gel | Tert. Amine W.B. |
| B | Methyl Acrylate-DVB | Macroporous | Quat. Amine S.B. |
| C | Methyl Acrylate-DVB | Gel | Quat. Amine S.B. |
| D | (Thermally activated carbon adsorbent.) | | |
| E | Styrene-DVB | Macroporous—large pores | Quat. Amine S.B. |
| F | TETA-Epichlorohydrin | Gel | W.B. Amine |
| G | Styrene-DVB | Macroporous | Sulfonated S.A. |
| H | Styrene-DVB | Macroporous | Quat. Amine S.B. |
| I | Styrene-DVB | Highly Macroporous—large pores | Unfunctional-ized |
| J | Phenol-Formaldehyde | Macroporous | Tert. Amine W.B. |
| K | Styrene-DVB | Macroporous | Tert. Amine W.B. |
| L | Styrene-DVB | Highly Macroporous | Unfunctional-ized |
| M | Styrene-DVB | Highly Macroporous—large pores | Unfunctional-ized |
| N | Methyl Acrylate-DVB | Highly Macroporous | Unfunctional-ized |
| O | Styrene-DVB | Gel | Quat. Amine S.B. |
| P | Styrene-DVB | Gel | Sulfonated S.A. |
| Q | Methyl Acrylate-DVB | Macroporous | Tert. Amine W.B. |

S.A.=Strongly Acidic
S.B.=Strongly Basic
W.B.=Weakly Basic
DVB=Divinylbenzene

4

**0 106 466**

TABLE -II

| Resin designation | Pre-treatment[1] | Functional group form | Extractables remaining after treatment, ppm |
|---|---|---|---|
| A | None | Free Base | 0.5 |
| A | $H_2SO_4$ | $SO_4^=$ | 0 |
| B | None | $Cl^-$ | 0 |
| B | $H_2SO_4$ | $SO_4^=$ | 0 |
| C | None | $Cl^-$ | 0.5 |
| D | None | — | 4 |
| E | None | $Cl^-$ | 3.5 |
| F | $Na_2CO_3$ | Free Base | 17 |
| F | NaOH | Free Base | 21 |
| G+H[2] | Regeneration | $H^+$, $OH^-$ | 18.5 |
| I | Alcohol | — | 21 |
| J | $Na_2CO_3$ | Free Base | 26 |
| K | $Na_2CO_3$ | Free Base | 28.5 |
| L | Alcohol | — | 31.5 |
| M | Alcohol | — | 38 |
| N | Alcohol | — | 50 |
| O+P[2] | Regeneration | $H^+$, $OH^-$ | 50 |
| Q | None | Free Base | 0 |

[1] Soak with aqueous solution of indicated reagent, or with alcohol.
[2] Mixed bed, i.e., a mixture of the two resins.

Example 2

This example illustrates the use of an acrylic, weak-base anion exchange resin under continuous-flow conditions for sugar syrup treatment. A 5.08 cm (2 inch) long by 1.27 cm (0.5 inch) diameter bed of Resin A was used to treat a decantionized, 30% dextrose solution containing 50 ppm of sulfonic resin extractables. The dextrose solution, at 50°C was passed through the bed at a flow rate of 10 bed volumes per hour until the conductivity of the effluent solution began to increase sharply at about 20 μs/cm; the dextrose solution flow was stopped, and the number of bed volumes of solution treated was recorded. The bed was then regenerated with a 7%, aqueous sodium carbonate solution. The capacity of the resin bed for total anionic substances was determined from the known anion concentration of the solution and the volume of solution treated. The maximum resistivity of the treated solution for each cycle was recorded. The sulfonic resin extractables' leakage was measured spectrophotometrically, at the absorption maximum at about 225 nm, at the end of each cycle. The results are shown in Table III below.

The high flow rate and small bed volume used in the above example simulate the conditions under which the resin could operate as a minor amount of resin mixed into a conventional working anion exchange resin bed.

5

TABLE III

| Cycle No. | Bed volumes during cycle | Resin capacity after cycle (meq/ml) | Maximum resistivity MΩ · cm | Extract- ables leakage (ppm) |
|---|---|---|---|---|
| 1 | 60 | 1.63 | 0.30 | 0 |
| 2 | 57 | 1.56 | 0.35 | 0 |
| 3 | 53 | 1.43 | 1.20 | — |
| 4 | 52 | 1.40 | 1.40 | 2.5 |
| 6 | 53 | 1.43 | 1.80 | 3.5 |

Example 3

This example illustrates the use and regeneration of an acrylic, strong-base anion exchange resin under conditions of continuous flow for sugar syrup treatment. A 5.08 cm (2 inch) long by 1.27 cm (0.5 inch) diameter bed of Resin B was used to treat a dextrose solution simulating deionized, 40% dextrose from conventional sugar syrup processes. The syrup was passed through the bed at a rate of 5 bed volumes per hour. The syrup contained 50 ppm of the sulfonic resin extractables described above, and leakage of the extractables through the bed was less than the limit of detectability for 900 bed volumes. Resin exhausted with sulfonic resin extractables was regenerated satisfactorily with aqueous concentrated hydrochloric acid.

**Claims**

1. A process for removing sulfonic resin extractables from an aqueous sugar solution which has been treated with sulfonic-group-functionalized, cation exchange resin characterised by contacting said sugar solution with acrylic, anion exchange resin, and subsequently separating the sugar solution from the anion exchange resin.

2. A process as claimed in Claim 1 wherein the acrylic anion exchange resin comprises strongly basic or weakly basic, gel resin.

3. A process as claimed in Claim 1 wherein the acrylic anion exchange resin is used in a mixture with weakly basic non-acrylic anion exchange resin.

4. A process as claimed in Claim 3 wherein the acrylic resin is present in an amount of less than 50% by weight of the mixture.

5. A process as claimed in Claim 3 or 4 wherein the non-acrylic resin comprises styrenic, phenolic and/or epichlorohydrin-polyamine resin.

6. A process as claimed in any preceding claim wherein, after at least partial exhaustion of the acrylic anion exchange resin, the partially exhausted acrylic resin is regenerated with a regenerant solution from which it is subsequently separated for reuse.

7. A process as claimed in Claim 6 wherein the acrylic anion exchange resin comprises weakly basic resin and the regenerant solution comprises an aqueous alkali metal hydroxide, ammonium hydroxide and/or alkali metal carbonate solution.

8. A process as claimed in Claim 6 wherein the acrylic anion exchange resin comprises strongly basic resin and the regenerant solution comprises aqueous alkali metal chloride, concentrated hydrochloric acid, or dilute aqueous hydrochloric acid containing water-miscible alcohol in an amount up to 30% by weight.

9. A process as claimed in any preceding claim wherein the sugar solution is a high-fructose corn syrup solution.

**Patentansprüche**

1. Verfahren zur Entfernung von aus Sulfonharz extrahierbaren Bestandteilen aus einer wässrigen Zuckerlösung, die mit einem Sulfonsäuregruppen-funktionalisierten Kationenaustauscherharz behandelt worden ist, dadurch gekennzeichnet, daß die Zuckerlösung mit einem acrylanionischen Austauscherharz behandelt wird und anschließend die Zuckerlösung von dem Anionenaustauscherharz abgetrennt wird.

2. Verfahren nach Anspruch 1, wobei das Acrylanionenaustauscherharz aus einem stark basischen oder schwach basischen Gelharz besteht.

3. Verfahren nach Anspruch 1, wobei das Acrylanionenaustauscherharz in einer Mischung mit einem schwach basischen Nichtacryl-Anionenaustauscherharz verwendet wird.

4. Verfahren nach Anspruch 3, wobei das Acrylharz in einer Menge von weniger als 50 Gew.-% der Mischung vorliegt.

5. Verfahren nach Anspruch 3 oder 4, wobei das Nichtacrylharz aus einem Styrol-, Phenol- und/oder Epichlorhydrin-Polyamin-Harz besteht.

6. Verfahren nach einem der vorhergehenden Ansprüche, wobei nach einer wenigstens teilweisen Erschöpfung des Acrylanionenaustauscherharzes das teilweise erschöpfte Acrylharz mit einer Regenerierungsmittellösung regeneriert wird, aus welchem es anschließend für eine erneute Verwendung abgetrennt wird.

7. Verfahren nach Anspruch 6, wobei das Acrylanionenaustauscherharz aus einem schwach basischen Harz und die Regenerierungsmittellösung aus einer wässrigen Alkalimetallhydroxid-, Ammoniumhydroxid- und/oder Alkalimetallmetallcarbonat-Lösung besteht.

8. Verfahren nach Anspruch 6, wobei das Acrylanionenaustauscherharz aus einem stark basischen Harz und die Regenerierungsmittellösung aus einem wässrigen Alkalimetallchlorid, konzentrierter Chlorwasserstoffsäure oder verdünnter wässriger Chlorwasserstoffsäure, die einen mit Wasser mischbaren Alkohol in einer Menge von bis zu 30 Gew.-% enthält, besteht.

9. Verfahren nach einem der vorhergehenden Ansprüche, wobei die Zuckerlösung eine Maissiruplösung mit hohem Fruktosegehalt ist.

## Revendications

1. Un procédé pour l'élimination des matiéres extractibles par résine sulfonique d'une solution aqueuse de sucre qui a été traitée avec une résine échangeuse de cations fonctionnalisée par des groupes sulfoniques, caractérisé par le contact de ladite solution de sucre avec une résine acrylique échangeuse d'anions puis la séparation de la solution de sucre d'avec la résine échangeuse d'anions.

2. Un procédé comme revendiqué dans la revendication 1 dans lequel la résine acrylique échangeuse d'anions comprend une résine sous forme d'un gel fortement basique ou faiblement basique.

3. Un procédé selon la revendication 1 dans lequel la résine acrylique échangeuse d'anions est utilisée en mélange avec une résine non acrylique échangeuse d'anions faiblement basique.

4. Un procédé selon la revendication 3 dans lequel la résine acrylique est présente en une quantité inférieure à 50% du poids du mélange.

5. Un procédé selon la revendication 3 ou 4 dans lequel la résine non acrylique comprend une résine styrénique, phénolique et/ou d'épichlorhydrine-polyamine.

6. Un procédé selon l'une quelconque des revendications précédentes dans lequel, après épuisement au moins partiel de la résine acrylique échangeuse d'anions, la résine acrylique partiellement épuisée est régénérée avec une solution régénérante dont elle est ensuite séparée pour être réutilisée.

7. Un procédé selon la revendication 6 dans lequel la résine acrylique échangeuse d'anions comprend une résine faiblement basique et la solution régénérante comprend une solution aqueuse d'hydroxyde de métal alcalin, d'hydroxyde d'ammonium et/ou de carbonate de métal alcalin.

8. Un procédé selon la revendication 6 dans lequel la résine acrylique échangeuse d'anions comprend une résine fortement basique et la solution régénérante comprend un chlorure de métal alcalin aqueux, de l'acide chlorhydrique concentré ou de l'acide chlorhydrique aqueux dilué contenant un alcool miscible à l'eau en une proportion allant jusqu'à 30% en poids.

9. Un procédé selon l'une quelconque des revendications précédentes dans lequel la solution de sucre est une solution de sirop de maïs riche en fructose.